# EUROPÄISCHE PATENTSCHRIFT

(11) **EP 3 441 136 B1**
(45) Veröffentlichungstag und Bekanntmachung des Hinweises auf die Patenterteilung: **23.12.2020**
(21) Anmeldenummer: 17185413.6
(22) Anmeldetag: 08.08.2017
(51) Int. Cl.: B01J 8/10, B01J 8/22, B01J 8/38, B01J 19/18, C10L 1/08, F04C 19/00, F04C 7/00

(54) **ZERKLEINERUNGS- UND MISCHVORRICHTUNG, SOWIE ANLAGE UND VERFAHREN ZUR KATALYTISCHEN DRUCKLOSEN VERÖLUNG**
DEVICE FOR CRUSHING AND MIXING, SYSTEM AND METHOD FOR CATALYTIC PRESSURELESS OILING
DISPOSITIF DE BROYAGE ET DE MÉLANGE AINSI QU'INSTALLATION ET PROCÉDÉ DE DÉPOLYMÉRISATION CATALYTIQUE SANS PRESSION

(43) Veröffentlichungstag der Anmeldung: 13.02.2019
(73) Patentinhaber: Tuma Pumpensysteme GmbH, 1230 Wien (AT)
(72) Erfinder: Mittinger, Robert, 2351 Wiener Neudorf (AT)
(74) Vertreter: Patentbüro Paul Rosenich AG

(56) Entgegenhaltungen:
- EP-A1- 2 080 745
- EP-A1- 2 407 528
- WO-A1-2018/172520
- CN-A- 105 327 668

## Beschreibung

Die Erfindung betrifft eine Zerkleinerungs- und Mischvorrichtung, insbesondere zum Einsatz in Anlagen zur katalytischen drucklosen Verölung von kohlenwasserstoffhaltigem Eingangsmaterial, gemäss dem Oberbegriff von Anspruch 1, sowie eine derartige Anlage, gemäss dem Oberbegriff von Anspruch 10, und ein Verfahren zum Betreiben einer derartigen Anlage, gemäss dem Oberbegriff von Anspruch 15.

Die katalytische drucklose Verölung oder thermokatalytische Niedertemperaturkonvertierung ist ein technisches Depolymerisationsverfahren, bei welchem Polymere und langkettige Kohlenwasserstoffe unter Zusatz eines Katalysators bei Temperaturen unterhalb 400 °C ohne Überdruck in kurzkettigere aliphatische Kohlenwasserstoffe umgewandelt werden. Das Endprodukt ist vergleichbar mit synthetischem Leichtöl bzw. Dieselkraftstoff. Haupteinsatzgebiet ist die Umwandlung von Abfällen in Kraftstoffe.

Um den Prozess der katalytischen drucklosen Verölung zu starten, benötigt man ein Wärmeträgeröl als Medium, organische Feststoffe als Ausgangsmaterial, einen Katalysator. Die Feststoffe müssen dabei möglichst klein gemahlen werden, um einen möglichst hohen Ertrag zu erhalten. Die derzeit gefahrenen Temperaturen von etwa 300° C sollen in Zukunft auf 400°C oder höher angehoben werden. Allerdings stellt die Wärmeentwicklung ein Problem für die in der Anlage eingesetzten Materialien dar, speziell für Dichtung und Lagerung, dar. Ein Beispiel dazu ist in der WO2016116484A1 offenbart. Aus der DE102012000980A1 ist die Kompression und mechanische Erwärmung eines Mediums mittels einer exzentrisch in einem Gehäuse montierten Flügelradpumpe bekannt. Von aussen wird Stickstoff zugeführt.

Die CN105327668A offenbart eine Vorrichtung zur chemischen Reaktion geeignet mit einem Mischer, einem Schneidwerkzeug und einer Antriebseinrichtung, die zur Positionierung ausserhalb des Mischreaktors ausgelegt ist.

Die WO 2018/172520 A1 offenbart eine Förder- und Zerkleinerungsvorrichtung mit einer Tauchpumpe und einem Antrieb zum Antreiben der Tauchpumpe, wobei in der Tauchpumpe ein Werkzeug angeordnet ist mit dem ein Feststoff in einem Eingangsmaterial zerkleinerbar ist.

Die Aufgabe der vorliegenden Erfindung ist daher die Anhebung des Wirkungsgrades der katalytischen drucklosen Verölung bei gleichzeitiger möglichst grosser Schonung der Anlage und hoher Betriebssicherheit.

Die Aufgabe wird durch die Merkmale der unabhängigen Ansprüche 1, 10 und 15 gelöst. Vorteilhafte Weiterbildungen sind in den Figuren und in den abhängigen Patentansprüchen dargelegt.

Eine Anlage für die Anwendung der gegenständlichen Erfindung umfasst einen Mischreaktor, und die erfindungsgemässe Vorrichtung umfasst einen zur Anordnung im Mischreaktor der Anlage ausgelegten Zerkleinerungs- und Mischabschnitt, eine zur Positionierung ausserhalb des Mischreaktors ausgelegte Antriebseinrichtung und eine diese Antriebseinrichtung mit dem Zerkleinerungs- und Mischabschnitt antriebsmässig verbindende Antriebswelle.

Zur Lösung der Aufgabe ist die Zerkleinerungs- und Mischvorrichtung dadurch gekennzeichnet, dass der Zerkleinerungs- und Mischabschnitt von der Antriebseinrichtung mittels Wärmesperre aus dünnwandigen Edelstahlelementen mit geringem Wärmeleitkoeffizient thermisch entkoppelt ist. Derart lassen sich bei bestmöglicher Schonung der Anlagenteile Prozesstemperaturen bis zu 400° C erreichen, wodurch das Verfahren effizienter als bislang durchgeführt werden kann.

Bevorzugt ist die Antriebswelle durch die Wärmesperre aus dünnwandigen Edelstahlelementen mit geringem Wärmeleitkoeffizient und eine flexible Kupplung unterteilt, so dass - insbesondere bei doppelter thermischer Entkopplung durch Kombination beider Merkmale - ein Überhitzen der Lagerung der Antriebswelle vermieden werden kann. Dennoch kann der Lagerstuhl massiv ausgeführt werden, wobei zwei Kugellager die Hauptlast der Antriebswelle tragen.

Ein vorteilhaftes optionales Merkmal ist darin zu sehen, dass die Antriebswelle in einem Gehäuse geführt ist, an welchem ein doppelwandiger Deckelflansch angeordnet ist. Dieser Flansch ist vorzugsweise aus zwei Lagen eines dünnwandigen Edelstahlblechs angefertigt, welche durch Abstandselemente voneinander beabstandet gehalten werden. Dies trägt zur Minimierung der Wärmeübertragung bei, während dennoch die Last sowie das Drehmoment des Antriebs der Zerkleinerungs- und Mischvorrichtung sicher aufgenommen werden kann.

Bevorzugt ist dabei in Höhe des Deckelflansches eine Wellenlager-Wellendichtungs-Einheit für die Antriebswelle angeordnet.

Um auch für diese Einheit der Wärmeproblematik optimal zu begegnen, ist vorzugsweises zwischen dem im Mischreaktor angeordnete Zerkleinerungs- und Mischabschnitt und der Wellenlager-Wellendichtungs-Einheit ein Flügelrad zur Kühlung der Wellenlager-Wellendichtungseinheit auf der Antriebswelle angeordnet.

Zur weiteren Verbesserung der Wärmebeständigkeit der erfindungsgemässen Vorrichtung ist optional die Wellenlager-Wellendichtungseinheit zweistufig ausgeführt ist, wobei vorzugsweise die erste Stufe aus hitzebeständigen Packungsringen und die zweite Stufe aus einer berührungslosen Labyrinthdichtung besteht.

Einen weiteren Beitrag zur Wärmebeständigkeit ergibt das optionale Merkmal eines mediumsseitigen, trocken laufenden Gleitlagers der Antriebswelle, welches aus hitzebeständigen Sondermaterialen gefertigt ist.

Gemäss einer vorteilhaften Ausführungsform der Erfindung weist der Zerkleinerungs- und Mischabschnitt eine Flügelradpumpe, allenfalls mit einem Spiralgehäuse, auf. Vorzugsweise ragen Verwirbelungsbleche und/oder Kompressionsflächen von der Gehäuseinnenwandung ausgehend nach innen. Damit lässt sich auf einfache und effiziente Weise eine Kompressionsstufe oder eine möglichst turbulente Durchmischung des Ausgangsmaterials und des Mediums erzielen. Durch Kombination beider Merkmale sind beide Merkmale auch kombinierbar, wobei sich beide Effekte synergistisch verhalten und sowohl die Kompression der im Medium befindlichen Gase als auch die Verwirbelung wesentlich zur Erwärmung der Mischung beitragen.

Bevorzugt ist dabei vorgesehen, dass das Flügelrad der Flügelradpumpe geschliffene Rückschaufeln aufweist, und mit geringem Abstand am Gehäuse der Flügelradpumpe, den Verwirbelungsbleche und/oder den Kompressionsflächen entlanggeführt sind. Vorzugsweise ist dabei der Abstand zwischen dem Flügelrad und dem Gehäuse, den Verwirbelungsblechen und/oder den Kompressionsflächen einstellbar. Dies erlaubt eine Einstellung des Mahlgrades des Pumpenlaufrads, der optimal zur Zerkleinerung des Ausgangsmaterials beiträgt. Durch eine zusätzliche Lagerung können Umfangsgeschwindigkeit bis zu 35 m/s erreicht werden. Damit ist gewährleistet, dass die Strömungsgeschwindigkeit im Mischreaktor genügend hoch ist, um Verkokungen zu vermeiden.

Vorteilhafterweise kann ein Gasballastrohr mit einer Ansaugöffnung oberhalb des Mediums in das Gehäuse der Flügelradpumpe führen. Damit kann automatisch Prozessgas in die Pumpe angesaugt werden, um die Kompressionswärme im durchmischten Medium zu erhöhen.

Eine weitere erfindungsgemässe Ausführungsform der Erfindung ist dadurch gekennzeichnet, dass der Ausgang der Flügelradpumpe mit einer auswechselbaren Düse ausgestattet ist. Dies gestattet eine fixe Vor-Einstellung des für die chemische Reaktion im Mischreaktor wichtigen Überdrucks, der durch die Pumpe der Vorrichtung erzeugt wird.

Ein weiteres optionales Merkmal der Erfindung sieht vor, dass an der Antriebswelle, vor dem Eingang der Flügelradpumpe, ein Schneidwerk angeordnet ist, welches für die Vorzerkleinerung der zu verarbeitenden Feststoffe sorgt. Vorzugsweise ist dieses Schneidwerk mit austauschbaren und damit optimal an das zu verarbeitende Material angepassten Werkzeugen bestückbar.

Die Erfindung findet insbesondere Anwendung bei einer Vorrichtung zur katalytischen drucklosen Verölung von kohlenwasserstoffhaltigem Eingangsmaterial. Diese umfasst zumindest einen mit heissem Medium befüllten Mischreaktor mit zumindest einer Zufuhr für das Eingangsmaterial und zumindest einer Zufuhr für einen Katalysator, sowie mit zumindest einer im Mischreaktor angeordneten Zerkleinerungs- und Mischvorrichtung.

Zur Lösung der eingangs gestellten Aufgabe ist eine derartige Vorrichtung dadurch gekennzeichnet, dass Zerkleinerungs- und Mischvorrichtung gemäss einem der vorhergehenden Absätze ausgebildet ist.

Bevorzugt ist dabei vorgesehen, dass die Wandung des Mischreaktors zumindest teilweise aus zwei Lagen vorzugsweise eines dünnwandigen Edelstahlblechs besteht, die durch Abstandselemente voneinander beabstandet sind, wobei zumindest eine Passage für Kühlmedium zwischen den beiden Lagen hindurch verläuft. Dies bietet den Vorteil, dass dieser Kühlmantel den Grossteil der im Mischreaktor entstehenden Wärme abführen kann und damit die Lagerung der Antriebswelle und des Antriebs schützt. Vorzugsweise ist diese Passage als Kühlspirale ausgeführt.

Vorteilhafterweise ist gemäss einer weiteren Ausführungsform der Erfindung dieser Vorrichtung der Mischreaktor teilweise durch einen doppelwandigen Deckelflansch mit einer Durchführung für die Antriebswelle der Zerkleinerungs- und Mischvorrichtung begrenzt, um die Wärmeübertragung zu vermindern und die ausserhalb des Mischreaktors liegenden Teile der Anlage zu schützen.

Vorzugsweise ist diese Ausführungsform weiters dadurch gekennzeichnet, dass der Deckelflansch aus zwei Lagen vorzugsweise eines dünnwandigen Edelstahlblechs besteht, welche durch Abstandselemente voneinander beabstandet sind. Vorzugsweise ist in diesen Deckelflansch eine Wellenlager-Wellendichtungs-Einheit für die Antriebswelle eingesetzt. Dies trägt zur Minimierung der Wärmeübertragung bei, während dennoch die Last sowie das Drehmoment des Antriebs der Zerkleinerungs- und Mischvorrichtung sicher aufgenommen werden kann.

Um die Lagerung der Antriebswelle gegenüber den hohen Temperaturen im Mischreaktor zu schützen, kann eine Kühleinrichtung für die Wellenlager-Wellendichtungseinheit vorgesehen sein. Damit ist eine Steigerung der Prozesstemperatur gegenüber bisherigen Anlagen möglich. Vorzugsweise kommt dabei ein mit der Antriebswelle verbundenes Flügelrad zum Einsatz.

Eine weitere optionale Massnahme zur Verbesserung der Wärmebeständigkeit ist dadurch gegeben, dass die Wellenlager-Wellendichtungseinheit zweistufig ausgeführt ist, wobei vorzugsweise die erste Stufe aus hitzebeständigen Packungsringen und die zweite Stufe aus einer berührungslosen Labyrinthdichtung besteht.

Bevorzugt ist dabei das mediumsseitige, trocken laufende Gleitlager für die Antriebswelle aus hitzebeständigen Sondermaterialen gefertigt.

Das erfindungsgemässe Verfahren zum Betreiben einer Vorrichtung zur katalytischen drucklosen Verölung von kohlenwasserstoffhaltigem Eingangsmaterial gemäss zumindest einem der Ansprüche vorhergehenden Absätze umfasst die Befüllung eines Mischreaktors mit heissem Medium, die Zufuhr eines Eingangsmaterials und zumindest eines Katalysators, sowie die Zerkleinerung des Eingangsmaterials bei gleichzeitiger Erwärmung und Durchmischung des Mediums mit dem Eingangsmaterial und dem Katalysator in einem Zerkleinerungs- und Mischabschnitt.

Zur Lösung der eingangs gestellten Aufgabe wird der Füllstand des Mediums höher gehalten als die obere Begrenzung des Zerkleinerungs- und Mischabschnitts. Dies trägt zur optimalen Erwärmung des Mediums als auch zur bestmöglichen Durchmischung mit dem zerkleinerten Ausgangsmaterial bei.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
Fig. 1 eine Ausführungsform einer erfindungsgemässen Zerkleinerungs- und Mischvorrichtung in perspektivischer Ansicht,
Fig. 2 einen Längsschnitt durch die Vorrichtung der Fig. 1,
Fig. 3 einen Abschnitt der Antriebswelle der Fig. 2 gemäss einer Ausführungsform der Erfindung mit einer Wärmesperre,
Fig. 4 einen weiteren Abschnitt der Antriebswelle der Fig. 2 gemäss einer Ausführungsform der Erfindung mit einer Wellenlager-Wellendichtungseinheit,
Fig. 5 eine perspektivische Ansicht des Gehäuses der Flügelradpumpe des Zerkleinerungs- und Mischabschnittes gemäss einer Ausführungsform der erfindungsgemässen Vorrichtung der Fig. 1 und 2, und
Fig. 6 eine Ansicht von unten in axialer Richtung auf das Gehäuse der Flügelradpumpe des Zerkleinerungs- und Mischabschnittes gemäss einer Ausführungsform der erfindungsgemässen Vorrichtung der Fig. 1 und 2, mit einer Ausführungsvariante des Schneidwerks.

Die in den Zeichnungsfiguren dargestellte Ausführungsform einer erfindungsgemässen Zerkleinerungs- und Mischvorrichtung stellt eine Vorrichtung dar, wie sie typischerweise in Anlagen zur katalytischen drucklosen Verölung von kohlenwasserstoffhaltigem Eingangsmaterial zum Einsatz kommt. Derartige Anlagen umfassen zumindest einen mit heissem Medium befüllten Mischreaktor mit zumindest einer Zufuhr für das Eingangsmaterial und zumindest einer Zufuhr für einen Katalysator, sowie mit zumindest einer im Mischreaktor angeordneten Zerkleinerungs- und Mischvorrichtung.

Die in weiterer Folge beispielhaft beschriebene Ausführungsform wird von einem starken Elektromotor M als bevorzugte Variante für die Antriebseinrichtung angetrieben. Dieser Elektromotor M befindet sich, wenn die Vorrichtung in typischer Einbaustellung angeordnet ist, ganz oben. Von diesem Elektromotor M geht eine Antriebswelle 1 aus, die von einem zylinderförmigen Gehäuse 1a umgeben ist. Das Gehäuse 1a umfasst einen Längsabschnitt, der als Lagerstuhl 2 für die Antriebswelle 1 wirkt und zu diesem Zweck zwei Kugellager 2a aufweist, welche die Hauptlast der Antriebswelle 1 tragen.

Das untere Ende der Vorrichtung liegt innerhalb des Mischreaktors und ist durch eine vorzugsweise oben liegende Öffnung im Reaktor in diesen eingesetzt. Ein am Gehäuse 1a der Antriebswelle 1 angebrachter Deckelflansch 3 ist zum dichten Verschliessen dieser Öffnung im Mischreaktor vorgesehen.

Am dem Elektromotor M entgegengesetzten Ende der Antriebswelle 1 ist eine Flügelradpumpe P als Beispiel für einen im Mischreaktor der Anlage angeordneten Zerkleinerungs- und Mischabschnitt angeordnet, welche von der ausserhalb des Mischreaktors angeordneten Antriebseinrichtung angetrieben wird. Wie nachfolgend im Detail erläutert wird, ist dieser der im Mischreaktor angeordnete Zerkleinerungs- und Mischabschnitt von der Antriebseinrichtung thermisch entkoppelt.

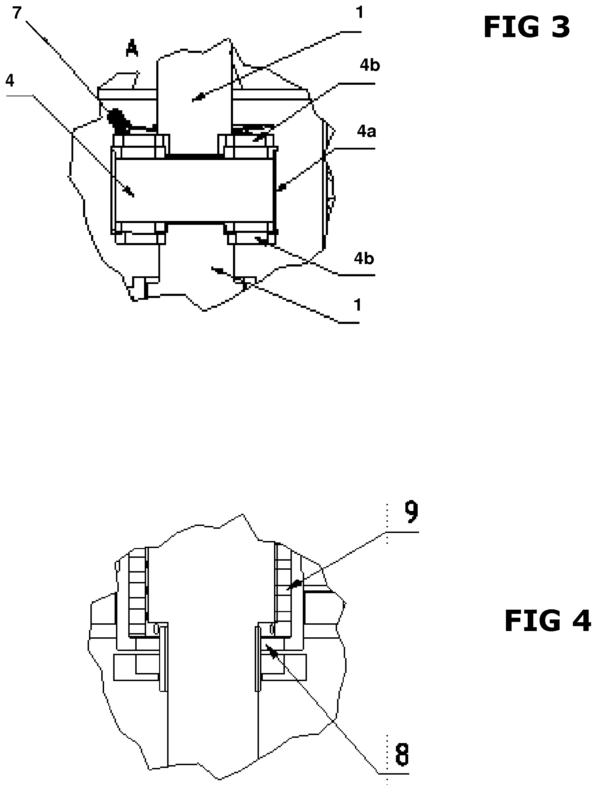

Eine bevorzugte Ausführungsform dieses Merkmals umfasst beispielsweise eine Wärmesperre 4 aus dünnwandigen, zylindrischen Edelstahlelementen 4a (siehe Fig. 3) mit geringem Wärmeleitkoeffizient. Die Verbindung dieser Edelstahlelemente 4a mit der Antriebswelle 1 wird über durchbrochene oder speichenartige Platten 4b bewerkstelligt. Diese Wärmesperre 4 ist zwischen zwei voneinander axial beabstandeten Abschnitten der Antriebswelle 1 eingesetzt, wobei der Radius der Edelstahlzylinder der Wärmesperre 4 wesentlich grösser ist als der Radius der Antriebswelle 1, um die Stabilität und die Torsionssteifigkeit zur Übertragung der Antriebskräfte zu gewährleisten. Die Wärmesperre 4 bietet eine komplette Unterbrechung der kompakten Antriebswelle 1. Allenfalls können auch mehrere derartiger Abschnitte koaxial zueinander und/oder in Serie in Längsrichtung der Antriebswelle aufeinanderfolgend vorgesehen sein.

Die Unterbrechung der Antriebswelle und damit des Wärmeübertragungspfades vom Mischreaktor zur Antriebseinrichtung kann auch durch eine flexible Kupplung gebildet sein. Vorteilhafterweise sind beide Merkmale vorhanden, um damit ein Überhitzen der Lagerung der Antriebswelle 1 und des Elektromotors M bestmöglich zu vermeiden.

Für eine optimale Wärmeisolierung des Mischreaktors ist der oben bereits erwähnte Deckelflansch 3 doppelwandig ausgeführt, insbesondere aus zwei Lagen eines dünnwandigen Edelstahlblechs angefertigt. Diese Bleche werden durch Abstandselemente 3a voneinander beabstandet gehalten. Bevorzugt ist dabei in Höhe des Deckelflansches 3 Anordnung aus einem Wellenlager 9 und einer Wellendichtung 8, vorzugsweise als bauliche Einheit ausgeführt, für die Antriebswelle 1 angeordnet (siehe Fig. 4). Für zusätzliche Kühlung des aus dem Mischreaktor ragenden Abschnitts der Antriebswelle 1 als auch der Wärmesperre, der Wellendichtung und des Wellenlagers 9 ist auf dem entgegengesetzten Abschnitt der Antriebswelle 1 ein Flügelrad 7 montiert. Die Wellenlager-Wellendichtungseinheit kann auch zweistufig ausgeführt sein. Die erste Stufe besteht vorzugsweise aus einer Anordnung aus hitzebeständigen Packungsringen und die zweite Stufe aus einer berührungslosen Labyrinthdichtung. Auch könnte ein mediumsseitiges, trocken laufenden Gleitlager der Antriebswelle aus hitzebeständigen Sondermaterialen vorhanden sein.

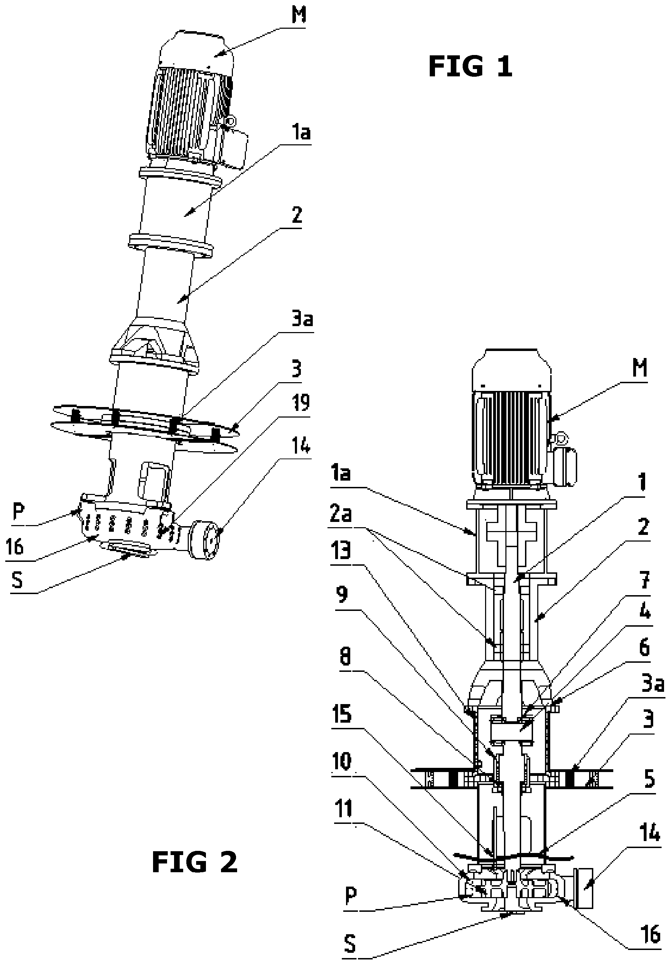

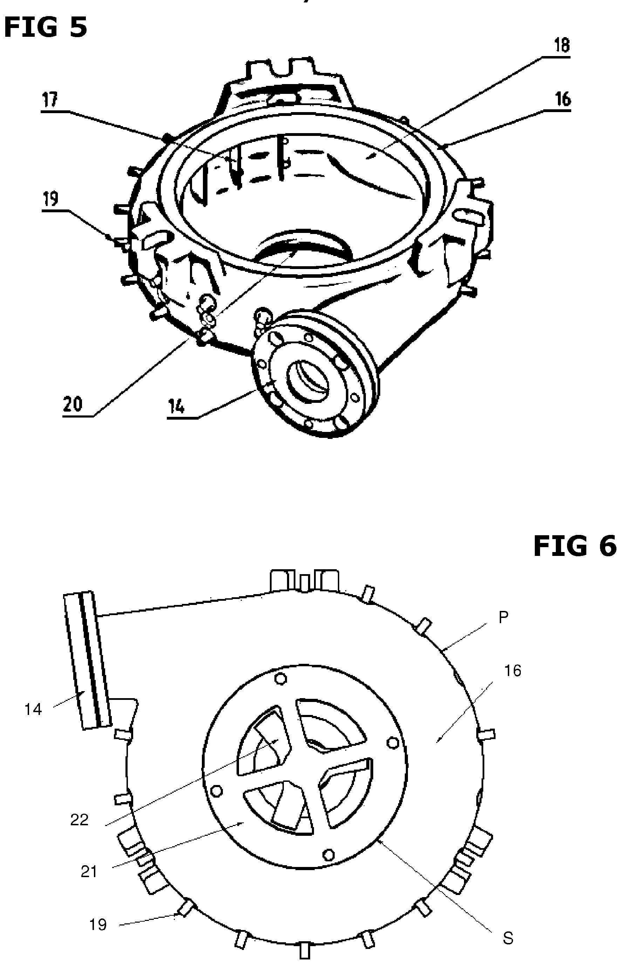

Die als Teil des im Reaktor befindlichen Zerkleinerungs- und Mischabschnitts eingesetzte Flügelradpumpe P könnte allenfalls ein Spiralgehäuse aufweisen, vorzugsweise jedoch ein rotationsymmetrisches Gehäuse 16, in welchem zentral das Flügelrad 11 sitzt (siehe Fig. 1). Wie in Fig. 5 zu erkennen ist, kann die Flügelradpumpe P mit Verwirbelungsblechen 17 versehen sein, die radial von der Innenwandung des Gehäuses 16 nach innen ragen. Alternativ oder zusätzlich dazu können auch Kompressionsstufen 10 mit beispielsweise Kompressionsflächen 18 von der Gehäuseinnenwandung ausgehend nach innen den Spalt zum Flügelrad 11 stellenweise verringern, um eine Kompression des im Medium befindlichen Gases und damit Temperaturerhöhung bzw. eine turbulente Durchmischung des Ausgangsmaterials und des Mediums zu erzielen.

Das Flügelrad 11 der Flügelradpumpe kann geschliffene Rückschaufeln aufweisen, welche auch mit geringem Abstand am Gehäuse 16 der Flügelradpumpe P oder auch den Verwirbelungsblechen 17 bzw. den Kompressionsflächen 18 entlanggeführt sind. Damit ist eine Mahlfunktion für die im Medium befindlichen Feststoffe bewirkt. Vorzugsweise ist dabei der Abstand zwischen dem Flügelrad 11 und dem Gehäuse 16, den Verwirbelungsblechen 17 und/oder den Kompressionsflächen 18 über beispielsweise Einstellschrauben 19 einstellbar, um eine Einstellung des Mahlgrades des Pumpenlaufrads 11 zu gewährleisten. Auch ist eine Einstellanordnung 6 für das Mahlwerk vorgesehen.

In Fig. 1 ist weiters ein Gasballastrohr 15 zu erkennen, das über seine Ansaugöffnung oberhalb des Mediums, dessen Füllstand mit 5 bezeichnet ist, Prozessgas in die Pumpe P führt. Am Ausgang der Flügelradpumpe P wiederum ist eine vorzugsweise auswechselbare Düse 14 vorhanden, um den Überdruck in der Pumpe P einzustellen.

Am untersten Ende der Antriebswelle 1, vor der zentralen Ansaugöffnung 20 im Gehäuse 16 der Pumpe P, ist ein Schneidwerk S angeordnet, um für die Vorzerkleinerung der zu verarbeitenden Feststoffe zu sorgen. Eine feststehende, am Gehäuse 16 fixierte, Schneidplatte 21 und ein an der Antriebswelle 1 befestigter, und damit relativ zur Schneidplatte 21 rotierender Schneidkopf 22 zerkleinern an deren gemeinsamen Schneidkanten die angesaugten Feststoffe. Beide Werkzeuge 21, 22 sind vorzugsweise austauschbar und damit optimal an das Material anzupassen. Die Schneidplatte 21 kann ein einiger, durchgehender Stab sein, aber auch nabenartige Anordnungen mit mehreren radialen Armen bis hin zu Lochplatten mit Löchern in beliebiger Grösse und Anordnung sind möglich. Der Schneidkopf 22 wiederum kann ebenso einen oder mehrere, vorzugsweise sternförmige Arme oder auch eine Vielzahl von radialen Schneiden aufweisen. Auch gekrümmte oder radial unterbrochene Schneidkanten sind möglich.

Auch die Wandung des Mischreaktors, bei welchem die erfindungsgemässe Misch- und Zerkleinerungsvorrichtung zum Einsatz kommt, kann zumindest teilweise aus zwei Lagen vorzugsweise eines dünnwandigen Edelstahlblechs bestehen. Auch der untere Bereich des Gehäuses 1a der Antriebswelle 1 kann als Kühlmantel 13 ausgeführt sein. Wie beim Deckelflansch 3 können auch hier Abstandselemente vorgesehen sein, um diese Blechlagen voneinander beabstandet zu halten. Zur weiteren Verbesserung der Kühlung des Mischreaktors kann zwischen den Blechen auch zumindest eine Passage für Kühlmedium hindurch verlaufen. Vorzugsweise ist diese Passage als Kühlspirale ausgeführt.

Durch die oben erläuterte Ausführung der Misch- und Zerkleinerungsvorrichtung kann das Verfahren zum Betreiben einer Vorrichtung zur katalytischen drucklosen Verölung von kohlenwasserstoffhaltigem Eingangsmaterial dahingehend gestaltet werden, dass der Füllstand des Mediums höher gehalten als die obere Begrenzung des Zerkleinerungs- und Mischabschnitts.

### Bezugszeichenliste

- 1: Antriebswelle
- 1a: Gehäuse der Antriebswelle
- 2: Lagerstuhl
- 2a: Kugellager
- 3: Deckelflansch
- 3a: Abstandselemente
- 4: Wärmesperre
- 4a: Edelstahlelemente
- 4b: Durchbrochene Platten
- 5: Füllstand des Mediums
- 6: Einstellanordnung für Mahlwerk
- 7: Flügelrad
- 8: Wellendichtung
- 9: Wellenlager
- 10: Kompressionsstufe
- 11: Flügelrad
- 13: Kühlmantel
- 14: Auswechselbare Düse
- 15: Gasballastrohr
- 16: Gehäuse der Flügelradpumpe
- 17: Verwirbelungsbleche
- 18: Kompressionsflächen
- 19: Einstellschrauben
- 20: Ansaugöffnung
- 21: Schneidplatte
- 22: Schneidkopf
- M: Elektromotor
- P: Flügelradpumpe
- S: Schneidwerk

## Patentansprüche

1. Zerkleinerungs- und Mischvorrichtung, insbesondere zum Einsatz in Anlagen zur katalytischen drucklosen Verölung von kohlenwasserstoffhaltigem Eingangsmaterial, mit einem zur Anordnung im Mischreaktor der Anlage ausgebildeten Zerkleinerungs- und Mischabschnitt (P), einer für die Positionierung ausserhalb des Mischreaktors ausgelegten Antriebseinrichtung (M) und einer diese Antriebseinrichtung mit dem Zerkleinerungs- und Mischabschnitt antriebsmässig verbindenden Antriebswelle (1), **dadurch gekennzeichnet, dass** der Zerkleinerungs- und Mischabschnitt (P) von der Antriebseinrichtung (M) mittels Wärmesperre (4) aus dünnwandigen Edelstahlelementen mit geringem Wärmeleitkoeffizient thermisch entkoppelt ist.

2. Vorrichtung nach Anspruch 1, **dadurch gekennzeichnet, dass** die Antriebswelle (1) durch die Wärmesperre (4) aus zylindrischen, dünnwandigen Edelstahlelementen mit geringem Wärmeleitkoeffizient und/oder eine flexible Kupplung unterteilt ist.

3. Vorrichtung nach Anspruch 1 oder 2, **dadurch gekennzeichnet, dass** die Antriebswelle (1) in einem Gehäuse (2) geführt ist, an welchem ein doppelwandiger Deckelflansch (3) vorzugsweise aus zwei Lagen eines dünnwandigen Edelstahlblechs, mittels Abstandselementen (3a) voneinander beabstandet, angeordnet ist, wobei vorzugsweise in Höhe des Deckelflansches (3) eine Wellenlager-Wellendichtungs-Einheit (8, 9) für die Antriebswelle (1) angeordnet ist, wobei vorzugsweise zwischen dem Zerkleinerungs- und Mischabschnitt (P) und der Wellenlager-Wellendichtungs-Einheit (8, 9) ein Flügelrad (7) zur Kühlung der Wellenlager-Wellendichtungseinheit (8, 9) auf der Antriebswelle (1) angeordnet ist.

4. Vorrichtung nach Anspruch 3, **dadurch gekennzeichnet, dass** die Wellenlager-Wellendichtungseinheit (8, 9) zweistufig ausgeführt ist, wobei vorzugsweise die erste Stufe aus hitzebeständigen Packungsringen für eine Prozesstemperatur bis zu 400°C oder höher besteht und die zweite Stufe aus einer berührungslosen Labyrinthdichtung besteht.

5. Vorrichtung nach einem der vorhergehenden Ansprüche, **dadurch gekennzeichnet, dass** ein mediumsseitiges, trocken laufendes Gleitlager für die Antriebswelle (1) aus hitzebeständigen Sondermaterialen für eine Prozesstemperatur bis zu 400°C oder höher gefertigt ist.

6. Vorrichtung nach einem der vorhergehenden Ansprüche, **dadurch gekennzeichnet, dass** der Zerkleinerungs- und Mischabschnitt eine Flügelradpumpe (P), allenfalls mit einem Spiralgehäuse, aufweist, wobei vorzugsweise Verwirbelungsbleche (17) und/oder Kompressionsflächen (18) von der Gehäuseinnenwandung (16) ausgehend nach innen ragen.

7. Vorrichtung nach Anspruch 6, **dadurch gekennzeichnet, dass** das Flügelrad (11) der Flügelradpumpe (P) geschliffene Rückschaufeln aufweist, und mit geringem Abstand am Gehäuse (16) der Flügelradpumpe (P), den Verwirbelungsblechen (17) und/oder den Kompressionsflächen (18) entlanggeführt sind, wobei vorzugsweise der Abstand zwischen dem Flügelrad (11) und dem Gehäuse (16), den Verwirbelungsblechen (17) und/oder den Kompressionsflächen (18) einstellbar ist, wobei vorzugsweise ein Gasballastrohr (15) mit einer Ansaugöffnung oberhalb des Mediums (5) in das Gehäuse der Flügelradpumpe (P) führt.

8. Vorrichtung nach Anspruch 7, **dadurch gekennzeichnet, dass** der Ausgang der Flügelradpumpe (P) mit einer auswechselbaren Düse (14) ausgestattet ist.

9. Vorrichtung nach Anspruch 7 oder 8, **dadurch gekennzeichnet, dass** an der Antriebswelle (1), vor dem Eingang der Flügelradpumpe (P), ein Schneidwerk (S) angeordnet ist, welches vorzugsweise mit austauschbaren Werkzeugen (21, 22) bestückbar ist.

10. Vorrichtung zur katalytischen drucklosen Verölung von kohlenwasserstoffhaltigem Eingangsmaterial, umfassend zumindest einen mit heissem Medium befüllten Mischreaktor mit zumindest einer Zufuhr für das Eingangsmaterial und zumindest einer Zufuhr für einen Katalysator, sowie mit zumindest einem im Mischreaktor angeordneten Zerkleinerungs- und Mischabschnitt, **dadurch gekennzeichnet, dass** Zerkleinerungs- und Mischabschnitt (P) ein Teil einer Zerkleinerungs- und Mischvorrichtung (M, 1, P) gemäss einem der Ansprüche 1 bis 9 ist.

11. Vorrichtung nach Anspruch 10, **dadurch gekennzeichnet, dass** die Wandung des Mischreaktors zumindest teilweise aus zwei Lagen vorzugsweise eines dünnwandigen Edelstahlblechs besteht, die durch Abstandselementen voneinander beabstandet sind, wobei zumindest eine Passage für ein Kühlmedium, vorzugsweise eine Kühlspirale, zwischen den beiden Lagen hindurch verläuft.

12. Vorrichtung nach Anspruch 10 oder 11, **dadurch gekennzeichnet, dass** der Mischreaktor teilweise durch einen doppelwandigen Deckelflansch (3) mit einer Durchführung für die Antriebswelle (1) der Zerkleinerungs- und Mischvorrichtung (P) begrenzt ist, wobei vorzugsweise der Deckelflansch (3) vorzugsweise aus zwei Lagen eines dünnwandigen Edelstahlblechs besteht, welche durch Abstandselemente (3a) voneinander beabstandet sind, und in welchen Deckelflansch (3) vorzugsweise eine Wellenlager-Wellendichtungs-Einheit (8, 9) für die Antriebswelle (1) eingesetzt ist.

13. Vorrichtung nach Anspruch 12, **dadurch gekennzeichnet, dass** eine Kühleinrichtung für die Wellenlager-Wellendichtungseinheit (8, 9) vorgesehen ist, vorzugsweise ein mit der Antriebswelle verbundenes Flügelrad (7) und vorzugsweise die Wellenlager-Wellendichtungseinheit (8, 9) zweistufig ausgeführt ist, wobei vorzugsweise die erste Stufe aus hitzebeständigen Packungsringen und die zweite Stufe aus einer berührungslosen Labyrinthdichtung besteht.

14. Vorrichtung nach einem der Ansprüche 12 oder 13, **dadurch gekennzeichnet, dass** ein mediumsseitiges, trocken laufendes Gleitlager für die Antriebswelle (1) aus hitzebeständigen Sondermaterialen gefertigt ist.

15. Verfahren zum Betreiben einer Vorrichtung zur katalytischen drucklosen Verölung von kohlenwasserstoffhaltigem Eingangsmaterial gemäss einem der Ansprüche 10 bis 14, umfassend die Befüllung eines Mischreaktors mit heissem Medium für eine Prozesstemperatur bis zu 400°C oder höher, die Zufuhr eines Eingangsmaterials und zumindest eines Katalysators, sowie die Zerkleinerung des Eingangsmaterials bei gleichzeitiger Erwärmung und Durchmischung des Mediums mit dem Eingangsmaterial und dem Katalysator in einem Zerkleinerungs- und Mischabschnitt, **dadurch gekennzeichnet, dass** der Füllstand des Mediums (5) höher gehalten wird als die obere Begrenzung des Zerkleinerungs- und Mischabschnitts (P) und **dass** vor dem Zerkleinerungs- und Mischabschnitts (P) ein Vorzerkleinern von zu verarbeitenden Feststoffen mittels Schneidwerk (S) stattfindet.

## Claims

1. A crushing and mixing apparatus, particularly for use in systems for catalytic pressureless oiling of hydrocarbon- containing feedstock, with a crushing and mixing part (P) designed for arrangement in the mixing reactor of the system, a drive device (M) designed for the positioning outside of the mixing reactor, and a drive shaft (1) which connects said drive device to the crushing and mixing part in driving manner, **characterized in that** the crushing and mixing part (P) is thermally decoupled from the drive device (M) by means of heat barrier (4) consisting of thin-walled stainless steel elements with low coefficient of thermal conductivity.

2. The apparatus according to Claim 1, **characterized in that** the drive shaft (1) is divided by the heat barrier (4) consisting of cylindrical thin-walled stainless steel elements with low coefficient of thermal conductivity and/or a flexible coupling.

3. The apparatus according to Claim 1 or 2, **characterized in that** the drive shaft (1) is guided in a housing (2) on which a double-walled cover flange (3), preferably made from two layers of a thin-walled stainless steel sheet separated from each other by spacer elements (3a), is arranged, wherein a shaft bearing-shaft seal unit (8, 9) for the drive shaft (1) is arranged preferably level with the cover flange (3), wherein an impeller (7) is arranged on the drive shaft (1) preferably between the crushing and mixing part (P) and the shaft bearing-shaft seal unit (8, 9) in order to cool the shaft bearing-shaft seal unit (8, 9).

4. The apparatus according to Claim 3, **characterized in that** the shaft bearing-shaft seal unit (8, 9) is constructed in two stages, wherein the first stage is preferably made up of heat-resistant packing rings for a process temperature up to 400 °C or higher, and the second stage consists of a contactless labyrinth seal.

5. The apparatus according to any one of the preceding claims, **characterized in that** a medium-side, dry running plain bearing for the drive shaft (1) is manufactured from heat-resistant special materials for a process temperature up to 400 °C or higher.

6. The apparatus according to any one of the preceding claims, **characterized in that** the crushing and mixing part has an impeller pump (P), if necessary with a spiral housing, wherein preferably turbulence vanes (17) and/or compression surfaces (18) protrude inwardly from the housing inner wall (16) .

7. The apparatus according to Claim 6, **characterized in that** the impeller (11) of the impeller pump (P) has smoothed back vanes which are driven along the turbulence vanes (17) and/or compression surfaces (18) and very close to the housing (16) of the impeller pump (P), wherein the distance between the impeller (11) and the housing (16), the turbulence vanes (17) and/or compression surfaces (18) is preferably adjustable, wherein preferably a gas ballast pipe (15) with a suction opening above the medium (5) passes into the housing of the impeller pump (P).

8. The apparatus according to Claim 7, **characterized in that** the outlet of the impeller pump (P) is equipped with a replaceable nozzle (14).

9. The apparatus according to Claim 7 or 8, **characterized in that** a cutting unit (S) is arranged in front of the inlet to the impeller pump (P) on the drive shaft (1), and can preferably be equipped with replaceable tools (21, 22).

10. An apparatus for catalytic pressureless oiling of hydrocarbon- containing feedstock, comprising at least one mixing reactor filled with hot medium, with at least one feed arrangement for the feedstock and at least one feed arrangement for a catalyst, and with at least one crushing and mixing part arranged in the mixing reactor, **characterized in that** the crushing and mixing part (P) is part of a crushing and mixing apparatus (M, 1, P) according to any one of Claims 1 to 9.

11. The apparatus according to Claim 10, **characterized in that** the wall of the mixing reactors consists at least in part of two layers, preferably of a thin-walled stainless steel sheet which are separated from each other by spacer elements, wherein at least one passage for a coolant medium, preferably a cooling coil, passes between the two layers.

12. The apparatus according to Claim 10 or 11, **characterized in that** the mixing reactor is partially delimited by a double-walled cover flange (3) with a passthrough for the drive shaft (1) of the crushing and mixing apparatus (P), wherein preferably the cover flange (3) is preferably made from two layers of a thin-walled stainless steel sheet which are separated from each other by spacer elements (3a), and into which cover flange (3) preferably a shaft bearing-shaft seal unit (8, 9) for the drive shaft (1) is inserted.

13. The apparatus according to Claim 12, **characterized in that** a cooling device is provided for the shaft bearing-shaft seal unit (8, 9), preferably an impeller (7) which is connected to the drive shaft, and the shaft bearing-shaft seal unit (8, 9) is preferably constructed in two stages, wherein preferably the first stage is made up of heat-resistant packing rings and the second stage consists of a contactless labyrinth seal.

14. The apparatus according to either of Claims 12 or 13, **characterized in that** a medium-side, dry running plain bearing for the drive shaft (1) is manufactured from heat-resistant special materials.

15. A method for operating an apparatus for catalytic pressureless oiling of hydrocarbon-containing feedstock according to any one of Claims 10 to 14, comprising the filling of a mixing reactor with hot medium for a process temperature up to 400 °C or higher, the supply of a feedstock and at least one catalyst, and the crushing of the feedstock with simultaneous heating and mixing of the medium with the feedstock and the catalyst in a crushing and mixing part, **characterized in that** the fill level of the medium (5) is kept at a higher level than the upper limit of the crushing and mixing part (P), and that a pre-crushing of solids to be processed is carried out by means of a cutting unit (S) ahead of the crushing and mixing part (P).

## Revendications

1. Dispositif de broyage et de mélange, en particulier pour mise en œuvre dans des installations de dépolymérisation catalytique sans pression de matières premières hydrocarbonées, avec une section de broyage et de mélange (P) constituée pour mise en place dans le réacteur de mélange de l'installation, un système d'entraînement (M) conçu pour le positionnement en dehors du réacteur de mélange et un arbre d'entraînement (1) reliant en entraînement ce système d'entraînement à la section de broyage et de mélange, **caractérisé en ce que** la section de broyage et de mélange (P) est découplée thermiquement avec un faible coefficient de conductibilité thermique du système d'entraînement (M) au moyen d'une barrière thermique (4) composée d'éléments en acier spécial à paroi mince.

2. Dispositif selon la revendication 1, **caractérisé en ce que** l'arbre d'entraînement (1) est subdivisé par la barrière thermique (4) en éléments d'acier spécial cylindriques, à paroi mince avec un coefficient de conductibilité thermique faible et/ou un accouplement souple.

3. Dispositif selon la revendication 1 ou 2, **caractérisé en ce que** l'arbre d'entraînement (1) est guidé dans un carter (2) sur lequel est disposée une fausse bride (3) à double paroi, de préférence en deux couches d'une tôle en acier spécial à paroi mince, espacées l'une de l'autre, au moyen d'éléments d'espacement (3a), sachant que de préférence à hauteur de la fausse bride (3) est disposée une unité palier d'arbre-joint d'étanchéité d'arbre (8, 9) pour l'arbre d'entraînement (1), sachant que de préférence une roue à aubes (7) est disposée sur l'arbre d'entraînement (1) entre la section de broyage et de mélange (P) et l'unité palier d'arbre-joint d'étanchéité d'arbre (8, 9) pour refroidir l'unité palier d'arbre-joint d'étanchéité d'arbre (8, 9).

4. Dispositif selon la revendication 3, **caractérisé en ce que** l'unité palier d'arbre-joint d'étanchéité d'arbre (8, 9) est exécutée en deux gradins, sachant de préférence que le premier gradin est composé de bagues de garniture réfractaires pour une température de processus allant jusqu'à 400 °C ou plus et le deuxième gradin d'un joint d'étanchéité à labyrinthe sans contact.

5. Dispositif selon l'une quelconque des revendications précédentes, **caractérisé en ce qu'**un palier lisse côté milieu, fonctionnant à sec pour l'arbre d'entraînement (1) est fabriqué dans des matériaux spéciaux réfractaires pour une température de traitement allant jusqu'à 400 °C.

6. Dispositif selon l'une quelconque des revendications précédentes, **caractérisé en ce que** la section de broyage et de mélange comporte une pompe à roue à aubes (P), tout au plus avec un carter en spirale, sachant de préférence que des tôles de tourbillonnement (17) et/ou des surfaces de compression (18) font saillie vers l'intérieur en partant de la paroi intérieure de boîtier (16).

7. Dispositif selon la revendication 6, **caractérisé en ce que** la roue à aubes (11) de la pompe à roue à aubes (P) comporte des pales arrière polies et sont guidées le long des tôles de tourbillonnement (17) et/ou des surfaces de compression (18) à une faible distance sur le carter (16) de la pompe à roue à aubes (P), sachant de préférence que la distance entre la roue à aubes (11) et le carter (16), les tôles de tourbillonnement (17) et/ou les surfaces de compression (18) peut être réglée, sachant de préférence qu'un tube ballast à gaz (15) avec une ouverture d'aspiration au-dessus du milieu (5) mène dans le carter de la pompe à roue à aubes (P).

8. Dispositif selon la revendication 7, **caractérisé en ce que** la sortie de la pompe à roue à aubes (P) est équipée d'une buse (14) interchangeable.

9. Dispositif selon la revendication 7 ou 8, **caractérisé en ce que** sur l'arbre d'entraînement (1) est disposé avant l'entrée de la pompe à roue à aubes (P), un mécanisme de découpe (S), lequel peut être équipé de préférence d'outils échangeables (21, 22).

10. Dispositif de dépolymérisation catalytique sans pression de matières premières hydrocarbonées, comprenant au moins un réacteur de mélange rempli d'un milieu chaud avec au moins une arrivée pour les matières premières et au moins une arrivée pour un catalyseur, ainsi qu'avec au moins une section de broyage et de mélange disposée dans le réacteur de mélange, **caractérisé en ce que** la section de broyage et de mélange (P) constitue une partie d'un dispositif de broyage et de mélange (M, 1, P) selon l'une quelconque des revendications 1 à 9.

11. Dispositif selon la revendication 10, **caractérisé en ce que** la paroi du réacteur de mélange est composée au moins en partie de deux couches, de préférence d'une tôle d'acier spécial à paroi mince, qui sont espacées l'une de l'autre par des éléments d'espacement, sachant qu'au moins un passage pour un milieu réfrigérant, de préférence une spirale de refroidissement, passe à travers entre les deux couches.

12. Dispositif selon la revendication 10 ou 11, **caractérisé en ce que** le réacteur de mélange est limité en partie par une fausse bride (3) à paroi double avec un passage pour l'arbre d'entraînement (1) du dispositif de broyage et de mélange (P), sachant de préférence que la fausse bride (3) est composée de préférence de deux couches d'une tôle d'acier spécial à paroi mince, lesquelles sont espacées l'une de l'autre par des éléments d'écartement (3a) et fausse bride (3) dans laquelle est insérée de préférence une unité palier d'arbre-joint d'étanchéité d'arbre (8, 9) pour l'arbre d'entraînement (1).

13. Dispositif selon la revendication 12, **caractérisé en ce qu'**un système de refroidissement est prévu pour l'unité palier d'arbre-joint d'étanchéité d'arbre (8, 9), de préférence une roue à aubes (7) reliée à l'arbre d'entraînement et de préférence l'unité palier d'arbre-joint d'étanchéité d'arbre (8, 9) est exécutée en deux gradins, sachant de préférence que le premier gradin est composé de bagues de garniture réfractaires et le deuxième gradin d'un joint d'étanchéité labyrinthe sans contact.

14. Dispositif selon l'une quelconque des revendications 12 ou 13, **caractérisé en ce qu'**un palier lisse côté milieu, fonctionnant à sec pour l'arbre d'entraînement (1) est fabriqué en matériaux spéciaux réfractaires.

15. Procédé pour faire fonctionner un dispositif de dépolymérisation catalytique sans pression de matières premières hydrocarbonées selon l'une quelconque des revendications 10 à 14, comprenant le remplissage d'un réacteur de mélange avec un milieu chaud pour une température de processus allant jusqu'à 400 °C ou plus, l'arrivée de matières premières et au moins d'un catalyseur, ainsi que le broyage de matières premières lors du réchauffage simultané et du brassage du milieu avec les matières premières et le catalyseur dans une section de broyage et de mélange, **caractérisé en ce que** le niveau de remplissage du milieu (5) est maintenu plus élevé que la limite supérieure de la section de broyage et de mélange (P) et **en ce qu'**avant la section de broyage et de mélange (P) a lieu un broyage préliminaire des substances solides à traiter au moyen du mécanisme de découpe (S).
